# EUROPEAN PATENT SPECIFICATION

(11) **EP 0 938 992 B1**
(45) Date of publication and mention of the grant of the patent: **11.06.2003**
(21) Application number: 99103582.5
(22) Date of filing: 24.02.1999
(51) Int. Cl.: B60J 5/12, B60J 5/06

(54) **A motor vehicle body**
Fahrzeugkarosserie
Carosserie de véhicule à moteur

(30) Priority: 27.02.1998 IT TO980031 U
(43) Date of publication of application: 01.09.1999
(73) Proprietor: FIAT AUTO S.p.A., 10135 Torino (IT)
(72) Inventor: Demaria, Claudio, 14018 Villafranca d'Asti (IT)
(74) Representative: Eccetto, Mauro

(56) References cited:
- EP-A- 0 357 542
- DE-A- 19 714 678
- DE-A- 19 725 856
- US-A- 4 413 444
- US-A- 4 544 198

## Description

The present invention concerns a motor vehicle body according to the preamble of claim 1. A motor vehicle body of this kind is disclosed in US 4 544 198 A.

Motor vehicles and, in particular, commercial vehicles, are currently known which include one or more rectilinear longitudinal guides, to which slidable support elements are coupled such as, for example, runners both for the slidable side doors of the motor vehicle itself, or for bodies for gripping products and/or articles to be transported. In the particular case of slidable side doors, to which the following description specifically refers without loss of generality thereby, there is an upper attachment guide having a support function and to which is slidingly coupled a runner that is firmly connected to an associated side door.

In the known motor vehicles, the upper attachment guide is generally formed from an elongate body shaped to define a race for the rolling bodies of the associated runner, and having an attachment portion which is securely fixed, preferably by welding, to the lateral surface of a respective portion of the body.

The manufacture of the elongate body and its subsequent connection to the body is relatively difficult and, in any case, involves relatively high manufacturing and assembly costs which, in many cases, are further increased due to the fact that the elongate body must necessarily be concealed and, in any case, isolated as it generally has one or more cutting edges.

Furthermore, the elongate guide bodies, once connected to the body, project from the body itself into the luggage compartment of the motor vehicle and are therefore relatively bulky and, usually, difficult for the users of the motor vehicle to tolerate.

Obviously, the difficulties described above increase as the number of shaped guide bodies that must be manufactured and fitted in the motor vehicle increases. The object of the present invention is to manufacture a motor vehicle body which enables the problems described above to be overcome simply and economically.

According to the present invention, a motor vehicle body is provided including at least one longitudinal guide for a movable element which can be displaced longitudinally with respect to the body, characterised in that it includes at least one shaped longitudinal beam, and in that the said longitudinal guide is formed directly on the said longitudinal beam and is defined by an intermediate longitudinal portion of the longitudinal beam itself.

Preferably, in the body defined above, the longitudinal beam is hollow and the said longitudinal guide extends into the longitudinal beam itself.

The invention will now be described with reference to the accompanying drawings which exemplarily illustrate several non-limitative embodiments, in which:
Figure 1 illustrates, partially and in section, a first preferred embodiment of a motor vehicle body according to the present invention;
Figure 2 is similar to Figure 1 and illustrates, in section, a variant of a detail of Figure 1; and
Figure 3 illustrates, partially and in section, a second preferred embodiment of a motor vehicle body according to the present invention.

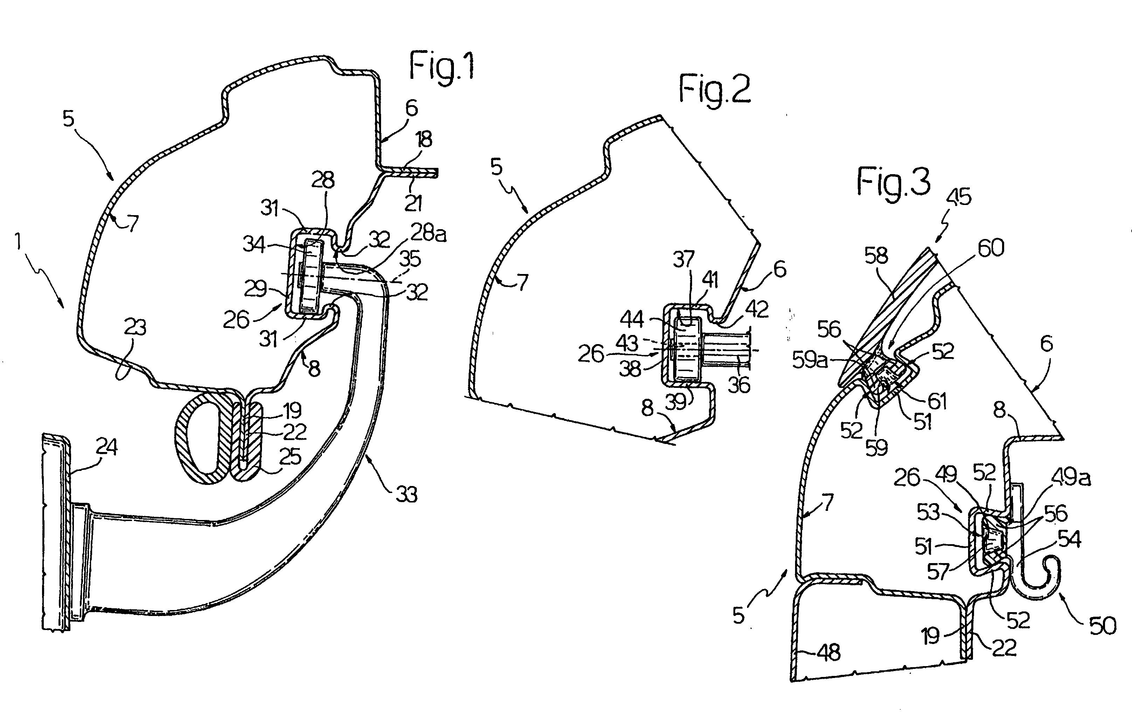

In Figure 1, the reference number 1 generally indicates a motor vehicle body including a plurality of pillars (not shown) and a roof 5 firmly connected to the pillars.

The body 1 further includes two upper longitudinal beams 6, only one of which is shown in Figure 1, which beams, in the particular example described, laterally delimit the roof 5. Each beam 6 is formed from two profiled metal elements 7 and 8, manufactured by profiling, of which the first element 7 is located on the outside and remains partly in view in the finished motor vehicle, while the second element 8 is inside the motor vehicle in a position facing the corresponding second element 8 of the other beam 6.

The outer first element 7 includes a horizontal first longitudinal flange 18 and a second longitudinal flange 19, which flanges are firmly connected to respective longitudinal flanges 21 and 22 of the second element 8 to form a shaped, box-like beam 6.

The first element 7, together with a pair of the pillars mentioned above (not shown), defines a lateral aperture 23 which is closed by a sliding door 24 that is movable in a longitudinal direction orthogonal to the plane of Figure 1 towards and away from a closure position in which the door 24 is in abutment against a known sealing gasket 25 fitted to the flanges 19 and 22.

Still with reference to Figure 1, an intermediate portion 26 of the second element 8, between the flanges 21 and 22, defines a longitudinal C-shape channel 28 having an aperture 28a facing the aperture 28a of the corresponding second element 8 of the other beam 6.

In particular, the channel 28 is delimited by a substantially vertical base wall 29, two side walls 31 that face each other and are parallel and orthogonal to the wall 29, and two ribs 32. The ribs 32 converge, starting from the respective walls 31 in positions facing and spaced from the wall 29, to define respective retaining undercuts.

The channel 28 defines a rectilinear portion of a longitudinal guide for a runner 33 for supporting the door 24. The runner 33 includes two or more wheels 34 housed in the channel 28 and which turn about respective axes 35 in contact with the lower wall 31 which therefore forms the race for the wheels 34 themselves.

In the embodiment illustrated in Figure 2, the beams 6 support a plurality of transversely movable bars 36, only one of which is partly illustrated in Figure 2, which, in use, enable various products or articles to be suspended or hooked on.

To this end, the intermediate portion 26 of each profiled second element 8 defines an associated longitudinal channel 37 which is delimited, in particular, by a vertical base wall 38, a flat, horizontal lower wall 39, an upper wall 41 and a rib 42 similar to the rib 32, and defines, together with the wall 39, an inlet opening 37a facing the aperture 37a of the channel 37 formed on the other beam 6.

Each bar 36 has respective opposite end portions 43 on each of which it is rotatably coupled, in an axially fixed position, an associated wheel or roller 44 housed in the associated channel 37 in order to turn, in use, in contact with the wall 39 and enable the associated bar 36 to move parallel to itself within the body 1.

The embodiment illustrated in Figure 3 concerns a body 45 which differs from the body 1 in some constructional details, and whose constituent parts are indicated, wherever possible, using the same reference numbers as the corresponding parts of the body 1.

In the body 45, the intermediate portion 26 of one or both of the profiled second elements 8 defines a related longitudinal dovetailed channel 49 delimited by a base wall 51 and two side walls 52. The side walls 52 define an inlet opening 49a of the channel 49 facing the other profiled second element 8, and converge towards each other and towards the aperture 49a itself.

The channel 49 defines a longitudinal guide for a plurality of gripping elements 50, only one of which is visible in Figure 3, which slidingly engage the channel 49. In particular, each element gripping 50 includes a slider portion 53 which extends into the channel 49, and a gripper portion 54. The section of the portion 53 complements that of the channel 49 and, in particular, includes two projections 56 which slide in contact with the walls 52 of the channel 49, and are connected to each other by respective partition walls 57.

Still with reference to Figure 3, the body 45 supports a roof 58 which is raised with respect to the beams 6, and coupled thereto. In the particular example described, the roof 58 is coupled to the beam 6 by means of respective slidable dovetailed couplings, each of which includes an associated longitudinal dovetailed channel 59, similar to the channel 49, defined by an outer intermediate portion of the related profiled first element 7, and having an inlet opening 59a facing the outside. Each channel 59 forms a sliding guide for a plurality of attachment elements 60, only one of which is visible in Figure 3, firmly attached to the roof 58 and having associated slider portions 61 similar to the portions 53. The roof 58 is then locked in a longitudinal position by a releasable and controllable locking device, known and not shown.

From the above, it is clear that the constructional characteristics of the beams 6 avoid the use of elongate guide elements welded to the body. This essentially means that the beams 6 are formed from profiled bodies which, due to the fact that they are profiled, have, with respect to corresponding parts obtained by pressing, portions and/or walls with undercuts, and therefore define sliding guides for a plurality of runners or sliders normally used on motor vehicles, including part of a guide for a side door of the motor vehicle.

It is therefore clear that the manufacturing characteristics of the beams 6 described enable a significant reduction to be obtained in both production and assembly costs as, with respect to the known bodies, the number and/or the dimension of the parts is reduced.

Furthermore, the manufacturing characteristics of the beams 6 and, in particular, the fact that the guides are formed completely within the beams 6 themselves, enables the elimination of a series of aesthetic problems which, in known bodies, depended on the relationship of these guide elements with the bodies.

Furthermore, it is clear from the above that various modifications and improvements may be introduced into the bodies 1 and 45 without by this departing from the ambit of the present invention. For example, the beams 6 can include a different number of profiled elements, and the profiled elements 7, 8 themselves can have shapes and geometries that are different from those described by way of example. Not only this, but the channels 28, 37, 49 and 59 can have shapes and geometries that are different from those described, and can be formed in different zones of the profiled elements 7 and 8. Furthermore, different runners or sliders from those described can be coupled with the channels 28, 37, 49 and 59, for example, to support attachment elements performing different functions from those indicated.

## Claims

1. A motor vehicle body (1; 45) including at least one longitudinal guide (28) (37) (49) (59) for a movable element (24) (36) (50) (58) which can be displaced longitudinally with respect to the body (1; 45), **characterised in that** it includes at least one shaped longitudinal beam (6), and **in that** the said longitudinal guide (28) (37) (49) (59) is formed directly on the said longitudinal beam (6) and is defined by an intermediate longitudinal portion (26) of the longitudinal beam (6) itself.

2. A body according to Claim 1, **characterised in that** the said longitudinal beam (6) is hollow and the said longitudinal guide (28) (37) (49) (59) extends into the longitudinal beam (6) itself.

3. A body according to Claim 1 or Claim 2, **characterised in that** the said longitudinal guide is defined by a longitudinal channel (28) (37) (49) (59) laterally delimited by at least one portion (32) (42) (52) of the said longitudinal beam (6), the at least one portion defining an undercut.

4. A body according to Claim 3, **characterised in that** the said channel (28) (37) (49) is formed on a portion (26) of the said longitudinal beam (6) facing into the body (1; 45).

5. A body according to Claim 4, **characterised in that** the said channel (28) (37) (49) has an opening (28a) (49a) in communication with the interior of the body (1; 45).

6. A body according to Claim 3, **characterised in that** the said channel (59) is formed on an outer portion (7) of the said longitudinal beam (6).

7. A body according to Claim 6, **characterised in that** the said channel (59) has an opening (59a) facing outwardly.

8. A body according to any of Claims from 3 to 7, **characterised in that** the said channel (28) (37) is a substantially C-shape in cross section.

9. A body according to any of Claims from 3 to 7, **characterised in that** the said channel (49) (59) is delimited by a base wall (51) and a side wall (52) which together form an acute angle.

10. A body according to Claim 9, **characterised in that** the said channel (49) (59) is a dovetail shape in cross section.

11. A body according to any of Claims from 3 to 10, **characterised in that** the said channel (28) (37) is delimited by at least one side wall (31) (39) defining a race for a plurality of rolling bodies (34) (44) for coupling the said movable element (24) to the said longitudinal beam (6).

12. A body according to any of Claims from 2 to 9, **characterised in that** the said channel (49) (59) is delimited by at least one side wall (52) defining a sliding track for at least one slider (56) for coupling the said movable element (50) (58) to the said longitudinal beam (6).

13. A body according to any preceding claim, **characterised in that** the said longitudinal beam (6) is a box-like structure and includes an outer profiled body (7) and an inner profiled body (8) firmly fixed to each other along respective longitudinal edges (18) (19) (21) (22) ; the said guide (28) (37) (49) (59) being formed on one of the said profiled bodies and extending into the said box-like beam (6).

14. A body according to Claim 13, **characterised in that** at least one (7) of the said profiled bodies (7) (8) includes at least one portion which remains in view in the finished motor vehicle.

## Patentansprüche

1. Motorfahrzeugkarosserie () (1; 45) mit mindestens einer Längsführung (28) (37) (49) (59) für ein bewegliches Element (24) (36) (50) (58), das in Längsrichtung in Bezug auf die Karosserie (1; 45) verschoben werden kann, **dadurch gekennzeichnet, dass** sie mindestens einen geformten Längsträger (6) aufweist und dass die Längsführung (28) (37) (49) (59) direkt an dem Längsträger (6) gebildet ist und durch einen Längszwischenabschnitt (26) des Längsträgers (6) selbst definiert ist.

2. Karosserie nach Anspruch 1, **dadurch gekennzeichnet, dass** der Längsträger (6) hohl ist und die Längsführung (28) (37) (49) (59) sich in den Längsträger (6) selbst erstreckt.

3. Karosserie nach Anspruch 1 oder 2, **dadurch gekennzeichnet, dass** die Längsführung durch einen Längskanal (28) (37) (49) (59) begrenzt ist, der seitlich von mindestens einem Abschnitt (32) (42) (52) des Längsträgers (6) begrenzt ist, wobei der mindestens eine Abschnitt eine Hinterschneidung definiert.

4. Karosserie nach Anspruch 3, **dadurch gekennzeichnet, dass** der Kanal (28) (37) (49) an einem Abschnitt (26) des Längsträgers (6) gebildet ist, der dem Inneren der Karosserie (1; 45) zugewandt ist.

5. Karosserie nach Anspruch 4, **dadurch gekennzeichnet, dass** der Kanal (28) (37) (49) eine Öffnung (28a) (49a) in Verbindung mit dem Inneren der Karosserie (1; 45) hat.

6. Karosserie nach Anspruch 3, **dadurch gekennzeichnet, dass** der Kanal (59) an einem äußeren Abschnitt (7) des Längsträgers (6) gebildet ist.

7. Karosserie nach Anspruch 6, **dadurch gekennzeichnet, dass** der Kanal (59) eine Öffnung (59a) hat, die nach außen weist.

8. Karosserie nach einem der Ansprüche 3 bis 7, **dadurch gekennzeichnet, dass** der Kanal (28) (37) einen im wesentlichen C-förmigen Querschnitt hat.

9. Karosserie nach einem der Ansprüche 3 bis 7, **dadurch gekennzeichnet, dass** der Kanal (49) (59) durch eine Basiswand (51) und eine Seitenwand (52) begrenzt ist, die zusammen einen spitzen Winkel bilden.

10. Karosserie nach Anspruch 9, **dadurch gekennzeichnet, dass** der Kanal (49) (59) einen schwalbenschwanzförmigen Querschnitt hat.

11. Karosserie nach einem der Ansprüche 3 bis 10, **dadurch gekennzeichnet, dass** der Kanal (28) (37) durch mindestens eine Seitenwand (31) (39) begrenzt ist, die eine Laufbahn für eine Mehrzahl von Rollkörpern (34) (44) begrenzt zum Koppeln des beweglichen Elements (24) an den Längsträger (6).

12. Karosserie nach einem der Ansprüche 2 bis 9, **dadurch gekennzeichnet, dass** der Kanal (49) (59) durch mindestens eine Seitenwand (52) begrenzt ist, die eine Gleitspur für mindestens ein Gleitstück (56) begrenzt zum Koppeln des beweglichen Elements (50) (58) an den Längsträger (6).

13. Karosserie nach einem der vorhergehenden Ansprüche, **dadurch gekennzeichnet, dass** der Längsträger (6) eine kastenähnliche Struktur hat und einen äußeren Profilkörper (7) und einen inneren Profilkörper (8) beinhaltet, die fest miteinander entlang entsprechender Längsränder (18) (19) (21) (22) befestigt sind; wobei die Führung (28) (37) (49) (59) an einem der Profilkörper gebildet ist und sich in den kastenförmigen Träger (6) hinein erstreckt.

14. Karosserie nach Anspruch 13, **dadurch gekennzeichnet, dass** mindestens einer (7) der Profilkörper (7) (8) mindestens einen Abschnitt beinhaltet, der in dem fertigen Motorfahrzeug sichtbar bleibt.

## Revendications

1. Carrosserie de véhicule à moteur (1 ; 45) comprenant au moins un guide longitudinal (28, 37, 49, 59) pour un élément mobile (24, 36, 50, 58) qui peut être déplacé longitudinalement par rapport à la carrosserie (1 ; 45), **caractérisée en ce qu'**elle comprend au moins une poutre longitudinale formée (6), et **en ce que** ledit guide longitudinal (28, 37, 49, 59) est formé directement sur ladite poutre longitudinale (6) et est défini par une partie longitudinale intermédiaire (26) de la poutre longitudinale (6).

2. Carrosserie selon la revendication 1, **caractérisée en ce que** ladite poutre longitudinale (6) est creuse et **en ce que** ledit guide longitudinal (28, 37, 49, 59) s'étend dans la poutre longitudinale (6).

3. Carrosserie selon la revendication 1 ou la revendication 2, **caractérisée en ce que** ledit guide longitudinal est défini par un canal longitudinal (28, 37, 49, 59) délimité latéralement par au moins une partie (32, 42, 52) de ladite poutre longitudinale (6), la au moins une partie définissant une gorge.

4. Carrosserie selon la revendication 3, **caractérisée en ce que** ledit canal (28, 37, 49) est formé sur une partie (26) de ladite poutre longitudinale (6) tournée vers l'intérieur de la carrosserie (1 ; 45).

5. Carrosserie selon la revendication 4, **caractérisée en ce que** ledit canal (28, 37, 49) possède une ouverture (28a, 49a) en communication avec l'intérieur de la carrosserie (1 ; 45).

6. Carrosserie selon la revendication 3, **caractérisée en ce que** ledit canal (59) est formé sur une partie extérieure (7) de ladite poutre longitudinale (6).

7. Carrosserie selon la revendication 6, **caractérisée en ce que** ledit canal (59) possède une ouverture (59a) tournée vers l'extérieur.

8. Carrosserie selon l'une quelconque des revendications 3 à 7, **caractérisée en ce que** ledit canal (28, 37) présente sensiblement la forme d'un C en coupe transversale.

9. Carrosserie selon l'une quelconque des revendications 3 à 7, **caractérisée en ce que** ledit canal (49, 59) est délimité par une paroi de base (51) et une paroi latérale (52) qui, conjointement, forment un angle aigu.

10. Carrosserie selon la revendication 9, **caractérisée en ce que** ledit canal (49, 59) présente la forme d'une queue d'aronde en coupe transversale.

11. Carrosserie selon l'une quelconque des revendications 3 à 10, **caractérisée en ce que** ledit canal (28, 37) est délimité par au moins une paroi latérale (31, 39) définissant une voie de roulement pour une pluralité de corps de roulement (34, 44) pour coupler ledit élément mobile (24) à ladite poutre longitudinale (6).

12. Carrosserie selon l'une quelconque des revendications 2 à 9, **caractérisée en ce que** ledit canal (49, 59) est délimité par au moins une paroi latérale (52) définissant un rail de coulissement pour au moins un coulisseaù (56) pour coupler ledit élément mobile (50, 58) à ladite poutre longitudinale (6).

13. Carrosserie selon l'une quelconque des revendications précédentes, **caractérisée en ce que** ladite poutre longitudinale (6) est une structure en forme de caisson et comprend un corps profilé extérieur (7) et un corps profilé intérieur (8) fixés solidement l'un à l'autre le long d'arêtes longitudinales respectives (18, 19, 21, 22) ; ledit guide (28, 37, 49, 59) étant formé sur l'un desdits corps profilés et s'étendant dans ladite poutre en forme de caisson (6).

14. Carrosserie selon la revendication 13, **caractérisée en ce qu'**au moins l'un (7) desdits corps profilés (7, 8) comprend au moins une partie qui demeure visible dans le véhicule à moteur fini.
